# EUROPEAN PATENT SPECIFICATION

(11) **EP 3 242 244 B1**
(45) Date of publication and mention of the grant of the patent: **19.05.2021**
(21) Application number: 17154127.9
(22) Date of filing: 01.02.2017
(51) Int. Cl.: G06F 21/88, G06F 21/55

(54) **PERSONAL GLOBAL POSITIONING SYSTEM (GPS) SECURITY TOKEN**
SICHERHEITSTOKEN FÜR PERSÖNLICHES GLOBALES POSITIONIERUNGSSYSTEM (GPS)
JETON DE SÉCURITÉ PERSONNELLE DE SYSTÈME DE POSITIONNEMENT GLOBAL (GPS)

(30) Priority: 03.05.2016 US 201615145695
(43) Date of publication of application: 08.11.2017
(73) Proprietor: The Boeing Company, Chicago, IL 60606-1596 (US)
(72) Inventor: GLATFELTER, John William, Chicago, IL 60606-1596 (US); GLATFELTER, David Patrick, Chicago, IL 60606-1596 (US)
(74) Representative: Witte, Weller & Partner Patentanwälte mbB

(56) References cited:
- US-A1- 2008 083 982
- US-A1- 2009 249 460

## Description

### TECHNICAL FIELD

The present invention relates generally, but not exclusively, to systems and computing devices with Global Positioning System (GPS) enabled technology for tracking and authenticating ownership, and more particularly to a system for generating an alert when a particular computing device or personal asset has been compromised based on userdefinable rules.

### BACKGROUND

Tracking the location of a computing device or asset has historically been performed by GPS. However, GPS locations can be easily spoofed, tampered, or interfered with. Thus, there exists a need for an improved method and system for tracking and securing valuable assets, particularly computing assets. The illustrative embodiments described below provide improved security by employing GPS technology for tracking the locations of multiple computing devices or assets, storing the location information for each asset, and then using that information to determine whether an asset has been stolen, cloned, or lost. The invention can also be implemented using other location technologies.

Document US 2009/0249460 A1 shows system and methods for altering the function of an electronic device in response to the device being lost, stolen or used in an unauthorized manner.

Document US 2008/0083982 A1 shows wireless tracking of personal devices and, more particularly, to a method and system for initiating a proximity warning alarm for electronic devices and subsequently prohibiting the unauthorized operation thereof.

### SUMMARY

Therefore, there are provide a system, a method, and a global-positioning system enabled security token according to the independent claims.

This Summary is provided to introduce a selection of concepts in a simplified form that are further described below in the Detailed Description. One way to increase computer device or asset security in a multiple GPS-enabled or non GPS-enabled (e.g., Wi-Fi or Bluetooth) computing device or asset environment, for instance, is to identify, register, and store location information for each individual computing device or asset. From the location information for each individual asset, a set of rules having approved locations can be generated for each asset. Each asset and its corresponding approved geographical location information may then be stored in a separate storage device as a personal asset registry in an array data structure. This asset registry may be retrieved or downloaded into a personal security token. The security token may then compare a current location of an asset with the set of rules having approved geographical location information to determine if a rule violation has occurred.

A system configured to generate a list of GPS-enabled or non GPS-enabled computing devices or assets, storing a set of rules having approved locations corresponding to each of the computing devices or assets, and then generate an alert responding to a computing device or asset that is in violation of the set of rules is disclosed herein. A separate personal security token configured to retrieve the list of assets and the set of rules from the storage device is also disclosed herein. The security token may compare the retrieved information with a current location of an asset to determine if a rule violation has occurred. By retrieving information, data, or a set of rules from a storage device into a security token and comparing the current location of an asset to a set of rules having approved geographical location information associated with the asset, a system may determine, for instance, whether the asset is being misused or stolen.

In illustrative examples of the present disclosure, a system, method, and security token are provided for generating an alert representing a rule violation given that an asset has travelled beyond its approved geographical location.

### BRIEF DESCRIPTION OF DRAWINGS

The foregoing Summary and the following Detailed Description are better understood when read in conjunction with the appended drawings. In order to illustrate the present disclosure, various aspects of the disclosure are shown. However, the disclosure is not limited to the specific aspects discussed. The following figures are included:
FIG. 1 illustrates five different types of security levels. Levels 1 through 4 are known example embodiments of security levels, whereas Level 5 depicts an alternate embodiment to a security level.
FIG. 2 illustrates a multiple computing device or asset environment configured to provide information to a storage device and/or security token.
FIG. 3 depicts an example schematic diagram of a security token (e.g., USB device).
FIG. 4 depicts alternate example embodiments of a security token.
FIG. 5 illustrates a flowchart representing the generation of a list of assets and a set of rules having approved geographical location information stored in a storage device, retrieving, by a security token, the information from the storage device, comparing, by the security token, a current location of an asset to the retrieved information, and determining if there is a rule violation.
FIG. 6 is a flow diagram of representing receiving a current geographical location, comparing the received current geographical location of the asset with a set of rules having approved geographical location information, detecting a rule violation, and performing a predetermined action in response to detecting rule violation.
FIG. 7 depicts a flow diagram representing the actions a security token may perform in response to receiving an alert.
FIG. 8 illustrates an example schematic diagram of a system with a computing device connected to a separate security token or computing device for end-to-end communication.

### DETAILED DESCRIPTION OF ILLUSTRATIVE EMBODIMENTS

In an environment where a user owns multiple GPS-enabled personal computing devices or assets, there exists an increased demand for improvement in computing device or asset security. Thus, a system configured to receive current GPS locations for a plurality of computing devices or assets, and compare the current GPS location of an asset with the stored set of rules having approved geographical location information for each asset to determine if there is a rule violation may be advantageous. The system may also be configured to generate an alert signal to inform a user, in real-time, that a particular asset may be compromised.

In another environment, the multiple personal computing devices or assets may be non GPS-enabled. In other words, the computing devices or assets may be in a Wi-Fi or Bluetooth connected environment where the system may be configured to receive current location information for a plurality of computing devices or assets, and compare the current location of an asset with the stored set of rules having approved geographical location information for each asset to determine if there is a rule violation. Moreover, in yet another environment, the system may be configured to receive a combination of GPS-enabled and non GPS-enabled location information from each individual computing device or asset and then perform the comparison to detect a rule violation.

Some GPS-enabled computing devices or assets may be configured for usage in a variety of different places. Therefore, being able to identify and track at least one of these GPS-enabled computing devices or assets, and generate an alert signal to inform a user if an asset is being compromised may provide an extra layer of security for the user. A separate personal security token may be configured to be worn or accompanied with each user such that the user can be notified, via the security token, of these alert signals.

Disclosed herein includes at least a system, method, and security token with a unique and improved mechanism for security for a plurality of computing devices or assets. Various systems, methods, and computer program products may be employed in conjunction with the practice of various aspects of the present disclosure. Aspects of the present disclosure may be employed in an improved security system for a user who owns at least one or more computing devices or assets. This improved mechanism may comprise of tracking the locations of multiple computing devices or assets, storing that location information, and then further using the stored information to determine whether a device or asset has been stolen, cloned, or lost. Industries, companies, and individuals may all leverage such an approach to improve their computer network security.

The various examples used in this disclosure are in the context of the design and development of security and security application systems, but it should be understood that the described principles may be applied to other developmental scenarios involving the communication between devices in a communications network. Such examples in the field of security devices include home security, office security, and/or data security. Additionally, the disclosure may be applicable in other industries.

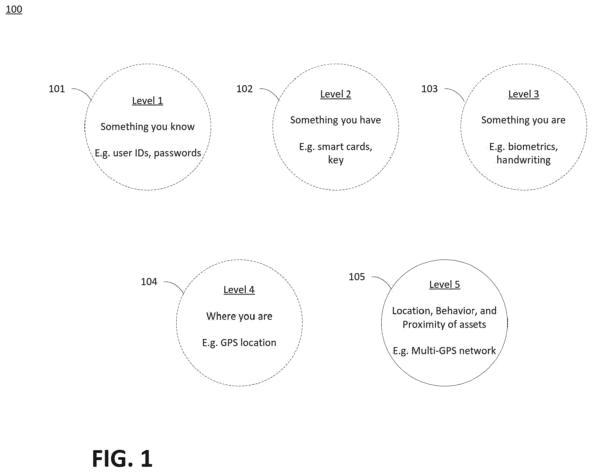

FIG. 1 illustrates five different types of security levels 100. Levels 1 through 4 are known in the art. Although FIG. 1 describes each security level in a numbering sequence, it may be possible that each security level be described in a different manner. Continuing to refer to FIG. 1, level 1 of security 101 is generally known to those in the art as a user inputting an identification and password combination. Level 2 of security 102 is generally known to those in the art as accessing a device or asset using a smart card or key. Level 3 of security 103 is generally known to those in the art as using biometrics or handwriting. Moreover, level 4 of security 104 is generally known to those in the art as GPS tracking of a computing device or asset. However, level 5 of security 105, as will be described further in detail in the present disclosure, uses GPS location information and a set of rules in a multiple GPS-enabled asset or device environment to locate and track a plurality of assets. This level 5 of security 105, in conjunction with the other four layers of security may provide for an extra layer or a heighted security environment for the plurality of GPS-enabled assets.

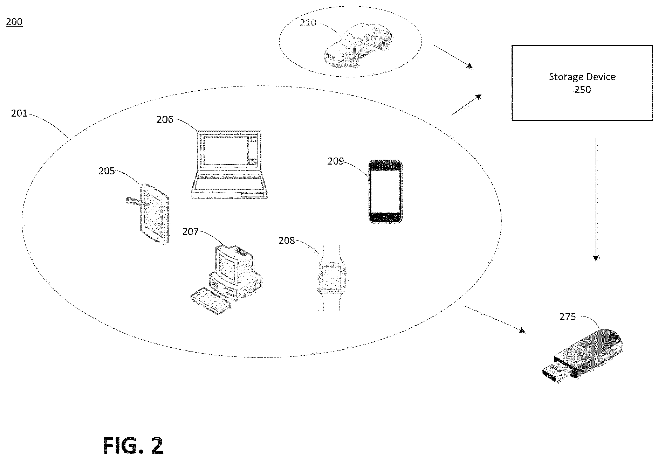

Level 5 security 105 enables a system to identify, register, and store GPS location information for each individual asset. From the GPS location associated with each individual asset, a set of predetermined rules having approved geographical locations can be generated for each asset. Each set of rules are then stored in a separate storage device and may be retrieved or downloaded into a personal security token. If a device or asset is out of range or compromised, an alert signal may be generated. Thus, level 5 of security 105 provides another layer of security protection for accessing a computing device or asset. The process of using level 5 of security 105 in conjunction with a personal security token is further described in FIGS. 2-8 below.

FIG. 2 shows a system 200 comprising a multiple GPS-enabled or non GPS-enabled computing device or asset environment 201 where information about each individual asset 205-209 is collected and sent to a storage device 250. This storage device 250 may be a separate storage device located in a user's home, a storage device located inside of a computing device (e.g., personal computer 207) that the user owns, or it may even be a cloud based storage device (e.g., centralized cloud service or central storage facility).

Further referring to FIG. 2, the multiple computing device or asset environment 201 may include at least one of: a tablet 205, a laptop 206, a personal computer 207, a smart watch 208, and a smartphone 209. Furthermore, the environment 201 may also include a car 210. Although a car 210 may not be considered a computing device or an asset, the car 210 may be configured with GPS transmitters and provide relevant geographical location information about other portable assets in environment 201. For example, when a laptop 206 or smartphone 209 travels inside of the car 210, the GPS location of the car 210 combined with the GPS location information of the laptop 206 and smartphone 209 may provide a more exact location of the laptop 206 or the smartphone 209 to the storage device 250.

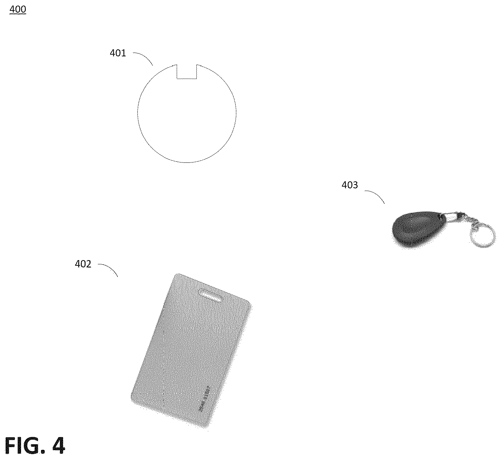

As described above, the storage device 250 may be a centralized cloud service or central storage facility to which location information of each individual asset 205-209 is uploaded. Once location information has been uploaded into the storage device 250, the information may then be encrypted and configured for retrieval by a security token 275. In FIG. 2, the security token 275 is illustrated as a universal serial bus (USB) device; however, the security token 275 may be of any type of token. In other words, the security token 275 is not limited to just a USB device or a thumb drive. Other possibilities of a security token 275 may include: a smart badge, an access card, or a key fob (see FIG. 4 for various alternate examples that may comprise of a security token).

Further referring to FIG. 2, the security token 275 may retrieve the information located in the storage device 250. This information may be retrieved from the storage device 250 either through a direct, wired, or wireless connection. The information may include a list of the plurality of GPS-enabled assets and the set of rules having approved geographical location information for each of the plurality of GPS-enabled assets. In an alternate embodiment, the information from the multiple GPS-enabled computing device or asset environment 201 may be directly provided to the security token 275 instead of first providing the information to the storage device 250. In other words, the security token 275 may directly retrieve or download information from the environment 201 and store it in its own memory first.

Once the information is retrieved, the security token 275 may then receive current geographical location information from each of the GPS-enabled assets 205-209. The security token 275 may use this to perform a comparison of the current location of the assets 205-209 with the retrieved information from the storage device 250 to detect or determine if there exists a rule violation. If a rule violation exists, then the security token 275 may perform a predetermined action in response to the detected rule violation. One of the predetermined actions may be generating an alert signal from the security token 275. The alert signal may comprise of a flashing red light, a vibration, or some sort of action that may require the attention of a user in possession of the security token 275. Once notified of the alert signal, the system 200 or a user may then determine subsequent actions, if any, to perform. For instance, a user may determine to allow, dismiss, or disable, lock, or even wipe clean information contained in the one of the plurality of GPS-enabled assets in response to receiving an alert signal.

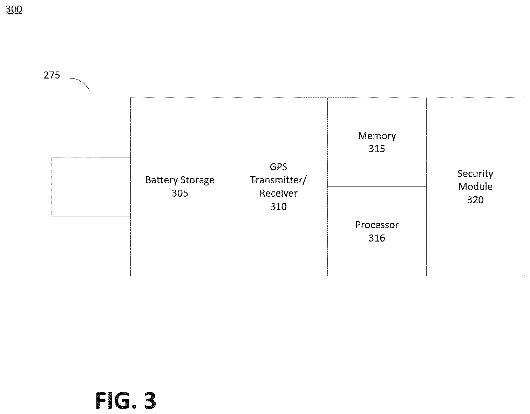

Now referring to FIG. 3, FIG. 3 illustrates a diagram 300 the components of a security token 275. In FIG. 3, a USB device is portrayed as security token 275. However, as known to those skilled in the art, security token 275 may comprise of different types. As shown in FIG. 3, the security token 275 may include at least one of: battery storage 305, GPS transmitter/receiver 310, memory 315, processor 316, and/or security module 320. The battery storage 305 may be a rechargeable battery or solar powered battery. Other possible types of batteries may also comprise of battery storage 305.

The GPS transmitter/receiver 310 of the security token 275 may be configured to receive GPS location information from assets 205-209. Furthermore, the security token 275 may also be configured to transmit geographical location information of the security token 275 to other assets 205-209 in the multiple GPS-enabled computing device or asset environment 201. For instance, if the security token 275 is compromised or stolen, the GPS transmitter/receiver 310 from the security token 275 may transmit location information to the personal computer 207 where a user with access to personal computer 207 may be notified that the security token 275 is outside of its range or approved geographical location. The user may then determine whether to dismiss, allow, or disable, lock, or wipe clean the information contained in the security token 275 via an application or graphical user interface (GUI) on the personal computer 207. In an alternate embodiment, security token 275 may also be configured to transmit geographical location information to the other assets 205-209 in a non GPS-enabled environment (e.g., Wi-Fi, Bluetooth).

The memory 315 of the security token 275 may be that of random access memory (RAM), flash memory, a hard disk drive, and/or any suitable memory. The memory 315 may be communicatively coupled to a processor 316. The memory 315 may contain at least two sets of rules associated with each individual asset 205-209 that may be retrieved from the storage device 250. In one example, and as described in this disclosure extensively herein, the memory 315 of the security token 275 may contain a set of rules having approved geographical location information for each individual asset 205-209. The set of rules may define a physical boundary or physical area of approved usage (e.g., personal computer 207 can only be inside of a user's home). In other words, the geographical rules provide the location information as to whether an asset is within its defined area of use.

In another example, the memory 315 of the security token 275 may contain programmable GPS pattern rules. The programmable GPS pattern rules defines behavior (time, location, movement, pattern, proximity) in comparison to other devices or assets. These rules may provide comparison of actual coordinate/location with definite region(s) of movement of an asset in absolute two-dimensional or proximity to another asset location. For this example, the security token 275 may compare not only the location information of an asset 205-209 to its corresponding approved geographical location information but also compare current time, current movement, current pattern, and current proximity to the asset's own set of rules corresponding to an approved time, an approved movement, an approved pattern, and/or an approved proximity information. These approved set of rules regarding the time, movement, pattern, and/or proximity may also be retrieved from the storage device 250.

As an example, the GPS pattern rules may be generally coded as follows:
a. IF (GPS_position OF ASSETI IS OUTSIDE APPROVED GPS RANGE) THEN
b. ALERT "ASSET1 has traveled outside of the approved geographical boundary defined"
c. ALERT? "Approved this new Location, Y, N"
d. ELSE ("everything is ok")

Further referring to FIG. 3, the security token 275 may also include its own security module 320. The security module 320 may be configured so that a user will need to provide security information in order to access data stored in the memory 315 of the security token 275. The GPS location information corresponding to each asset in the security token 275 may be encrypted and thus a security measure may first need to be bypassed before a user may decrypt, obtain, or access information related to the assets 205-209. As presented in FIG. 1, there are four types of security levels that are known to those skilled in the art and any of these types of security certificates may be applied to the security module 320. For instance, a user may have to bio-metrically bypass the security module 320 with their fingerprint prior to accessing data in the security token 275. By having a secondary or additional security module 320 in the security token 275, a heightened security to the overall multiple GPS-enabled computing device or asset environment 201 may be achieved because a thief or a non-conforming user cannot easily access the contents of the security token 275 and make unauthorized changes regarding the rules associated with each asset.

In an alternate embodiment, it may be possible that the system 200 does not include a security token 275 at all and rather, the alert signal is generated and displayed on a user's smartphone 209 instead of a separate security token 275. Since a user may constantly have their smartphone 209 in their possession, a user may also conveniently control assets 205-209 from his/her own smartphone 209. The smartphone 209 may be the user's own personal smartphone 209 or it may be a separate smartphone (not depicted) that the user carries around. The smartphone 209 would also comprise of the components described in the security token 275 illustrated in FIG. 3. For example, the smartphone 209 may also include: battery storage, GPS transmitter/receiver, memory, and/or a security module.

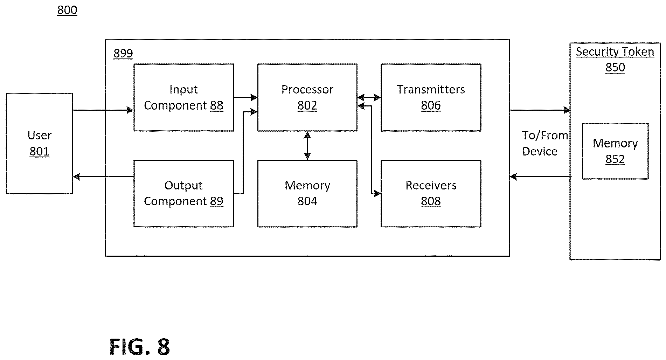

In yet another alternate embodiment, although the security token 275 is portrayed as a personal token that is carried around by the user in their possession, the user may also remotely access the information in the security token 275 via a separate computing device (e.g., personal computer 207). For instance, the security token 275 may be left at work and the user may want to check or track assets 205-209. The user may use a separate computing device (e.g., a personal computer 207 from home) and log into an application that would provide the contents of the security token 275. The information from the security token 275 may be that of a display motion map (not depicted) of GPS recorded location history for each individual asset 205-209. In other words, the motion map may provide the user with a historical replay of the paths each asset 205-209 has taken. This communication between a user, a personal computer, and the security token is illustrated in more detail below with respect to FIG. 8.

FIG. 4 depicts at least three different examples that may comprise of the security token 275 in lieu of a USB device as prescribed in FIG. 3 above. A key fob 403 may also be a convenient alternate embodiment since it is easy to carry around and can easily be attached to a set of keys accompanying a user. Similar to the components in the USB of FIG. 3, the components of the key fob 403 may also include the components described in the security token 275 of FIG. 3. Other examples of a security token include an access card 402 or a pin 401. The pin 401 may be located or placed on a user's clothing or purse. These example embodiments are non-limiting, and it is well known to those skilled in the art that other types of security tokens may also replace the security tokens 275 illustrated in FIGS. 3-4.

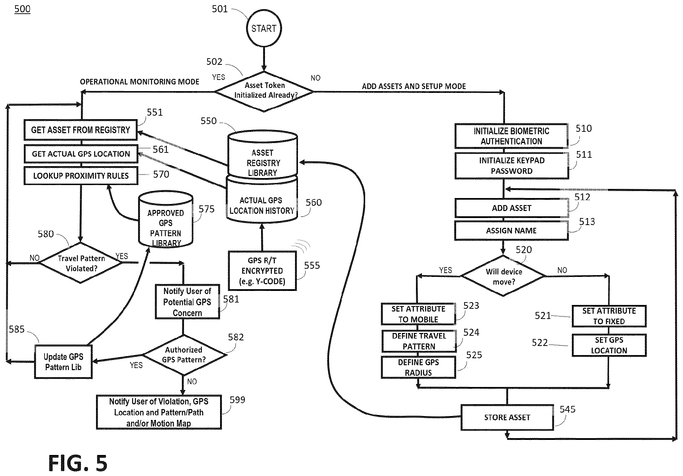

FIG. 5 refers to a detailed flow diagram 500, starting at 501, of storing 545 a list of the plurality of GPS-enabled assets 512-513 and a set of rules having approved geographical location information 523-525 for each of the plurality of GPS-enabled assets in a storage device, receiving 551, via one of the plurality of GPS-enabled assets, a current geographical location 561 of one of the plurality of GPS-enabled assets, comparing the received current geographical location 560 with the set of rules having approved geographical location information for the one of the plurality of GPS-enabled assets, detecting or determining a rule violation, and performing a predetermined action in response to detecting rule violation 585 or 599 after decision 582.

A list of the plurality of GPS-enabled assets and a set of rules having approved geographical location information for each of the plurality of GPS-enabled assets will be stored in a storage device if an asset has not been initialized. At block 502, the determination is made as to whether a particular asset has been initialized and has already stored a set of rules having approved geographical location information for the asset. If not, the system of diagram 500 adds a set of rules having approved geographical location information for the asset into a storage device. Prior to adding and storing information about the asset, the system of diagram 500 may initialize biometric and/or password 510-511 security certificates for a user to bypass before being able to add this information. Once bypassed in response to decision 520, the user may then apply attributes 521 and set the GPS location 522 corresponding to each asset respectively in preparation for storage.

Continuing to refer to FIG. 5, after the information pertaining to each individual asset is created or initialized, it may be provided to an asset registry library 550 located in central cloud storage facility. The information provided to the asset registry library 550 may initially be encrypted 555. A security token is configured to download or receive the list of the plurality of GPS-enabled assets and the set of rules having approved geographical location information for each of the plurality of GPS-enabled assets. The security token then is configured to retrieve current location information 560 from each asset so that a comparison 580 can be performed. This comparison 580 allows the system to determine or detect whether a rule violation has occurred and if so, the system may generate an alert 581. The determination may also be made to update or add 585 to the storage device of a new location for an asset. For instance, a user may want to add that tablet 205 may travel beyond 50 yards of the user's home. Thus, the user may amend or reconfigure the set of rules having approved geographical location information associated with tablet 205 so that this new location or extended perimeter authorization (e.g., now 100 yards away from home) is updated and eventually added to the asset registry library 550.

In another embodiment, the system may detect a rule violation using at least one of or a combination of: time, location, movement, pattern, and proximity instead of just the geographical location information of an asset. For instance, the system may use proximity rules 570 from an approved GPS pattern library 575, the proximity rules 570 corresponding to each of the assets and compare it with the current proximity information of the asset to detect if there is a rule violation. Proximity rules 570 may comprise of how close an asset is located in relation to another asset in a multiple GPS-enabled asset environment. For example, smartphone 209 of FIG. 2 is approved or associated with a set of proximity rules that it may not be 10 feet away from smartwatch 208. So, if smartphone 209 is 20 feet away from smartwatch 208 then a rule violation is detected. This is just one alternate embodiment of using a different set of rules (e.g., proximity rules) to detect whether an asset is compromised or not.

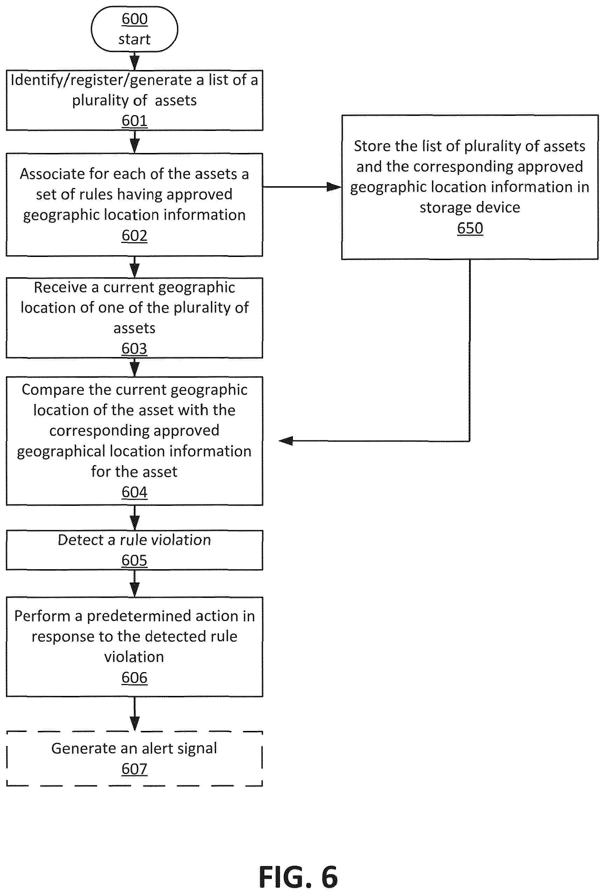

FIG. 6 illustrates a flowchart 600 of an example process for generating an alert when a computing device or asset has been compromised. Referring to block 601, the system may initially generate a list of a plurality of GPS-enabled assets. For instance, a user or an owner of multiple GPS-enabled assets may create an environment where each individual asset is described and labeled with a device identifier (e.g., device ID). As such, a list of the plurality of devices with their respective device IDs may then be created. The environment may comprise of: a smartphone, a smartwatch, a tablet, a personal computer, and/or a laptop. These assets are non-limiting examples as other types of devices may also be included or substituted herein.

Referring to block 602, the system may associate a set of rules having approved geographical location information for each of the GPS-enabled assets in the environment. This information along with the list of plurality of GPS-enabled assets as described in block 601 may be stored in a storage device (see block 650). In other words, the system may apply a set of GPS location rules for each individual asset. The set of rules may also comprise of: time information, speed/travel information, and/or other types of information related to the usage of an asset in lieu of or in combination with location information.

In block 603, the system may receive a current geographical location of one of the plurality of GPS-enabled assets. The current geographical location of each asset may be received from the GPS transmitter of an individual asset.

Referring to block 604, the current geographical location of the asset from block 603 is then compared with the set of rules having approved geographical location information for the asset from block 650. The comparison may determine or detect whether the current location of the asset is either in an allowed or disallowed area. In other words, the corresponding approved geographical location information provides a set of rules that approve or disapprove the current location of an asset.

In block 605, the system may be configured to detect whether a rule violation has occurred given the current location of the asset. In other words, the system compares the information and determines whether the asset is in a disapproved area.

Referring to block 606 and 607, once a rule violation has been detected, the system may perform a predetermined action. This predetermined action may comprise of informing a user or sending an alert signal to a security token that a rule violation has occurred. The alert signal may be that of a vibration, a visual display, or voice message describing that an asset has been compromised or stolen and is currently outside of its approved location.

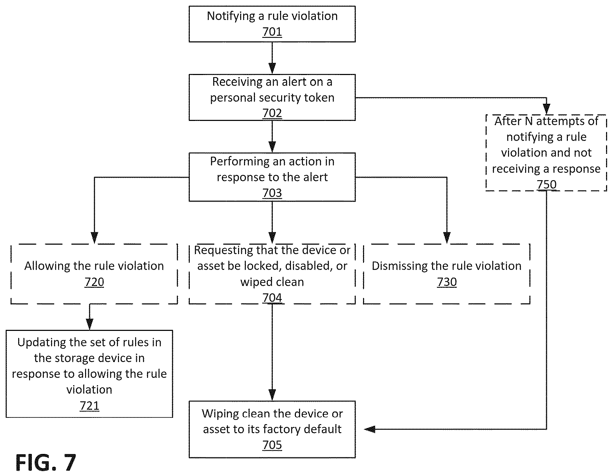

FIG. 7 illustrates a flowchart of the steps and process the system may perform when an alert is generated and after N amount (e.g., predetermined amount) of tries to contact a user to perform an action, the system may preemptively wipe out the data in the security token. Referring to block 701, the system may generate and notify of a rule violation when a computing device or asset has been compromised. This notification may be an alert signal.

In block 702, the security token may receive this alert signal and direct the system to perform an action. However, if the alert signal is generated and provided to the security token and there is no response, the alert signal may be generated and sent to the security token again. In block 750, after N denied attempts (e.g., three denied attempts) has been performed and no response has occurred, then the system may directly proceed to block 705 where the security token may be wiped clean. The memory in the security token that would be wiped clean would be the memory of the asset objects and the geographical rules. The "factory-defaults," the operating system, and the default configuration of the security token may not necessarily be wiped out. This is provided in the event that the token is stolen or lost in order to protect the user from a bad actor who is seeking to learn about the inventory and location of the other assets of the owner.

In the alternate case where an action is performed in response to receiving the alert (as shown in block 703), a user determines one of three actions (e.g allow the rule violation 720, dismiss the rule violation 730, or perform a lock, disable, or wipe clean of the asset 704). The user may request that the device or asset be locked, disabled, or wiped clean 704 because the user knows that the asset has been compromised. For example, an asset (e.g., a personal computer) has been attempting to log in, access, or be used in India. The user, who has never been to India and has lived in Seattle, Washington his/her entire life, would believe that his/her personal computer has been compromised or stolen. Thus, the user may want to disable, lock, or wipe clean the contents of his personal computer via the security token. The process of wiping clean the asset may be similarly performed, as mentioned above with respect to the token, by wiping clean the memory of the personal computer to its factory defaults.

On the other hand, the user may determine to allow the rule violation (as shown in block 720) because the user may have sent the personal computer to India as a gift to a family member. By allowing the rule violation, the system is updated or added to such that the set of rules originally stored in the storage device may now be reconfigured with new location information. Block 721 illustrates that the set of rules in the storage device may be updated if a user decides that a rule violation is allowable. As another example, a user may want to allow his/her smartphone to travel with him/her out of state on a business trip. So, when the original set of rules or approved geographical locations associated with the smartphone requires that the smartphone travel only within the state of Washington, the set of approved locations or rules may be updated. This way, when the user is on a business trip in New York, an alert would not be generated.

FIG. 8 is an example schematic diagram 800 of a computing device that may be used in conjunction with a separate personal GPS-enabled security token 850 for end-to-end communication between the security token 850 and a user 801. In one example, a computing device 899 may include a processor 802, a memory device 804 coupled to processor 802, one or more wireless transmitters 806, one or more wireless receivers 808, an output component 89, and an input component 88.

Processor 802 includes any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above example examples are not intended to limit in any way the definition and/or meaning of the term "processor."

Memory device 804 includes a non-transitory computer-readable storage medium, such as, without limitation, random access memory (RAM), flash memory, a hard disk drive, a solid state drive, a diskette, a Flash drive, a compact disc, a digital video disc, and/or any suitable memory. In the exemplary implementation, memory device 804 includes data and/or instructions embodying aspects of the disclosure that are executable by processor 802 (e.g., processor 802 may be programmed by the instructions) to enable processor 802 to perform the functions described herein. Additionally, the memory device 804 may comprise an operation system and applications.

Wireless transmitters 806 are configured to transmit control signals and data signals over a network. In one example, wireless transmitters 806 may transmit in a radio frequency spectrum and operate using an appropriate communication protocol.

Wireless receivers 808 are configured to receive control signals and data signals over network. In one example, wireless receivers 808 may receive signals on a radio frequency spectrum using an appropriate communication pro.

The computing device 899 may also include at least one output component 89 for presenting information to a user 801. Output component 89 may be any component capable of conveying information to user 801. In some implementations, output component 89 includes an output adapter, such as a video adapter and/or an audio adapter or the like. An output adapter is operatively coupled to processor 802 and is configured to be operatively coupled to an output device, such as a display device (e.g., a liquid crystal display (LCD), organic light emitting diode (OLED) display, cathode ray tube (CRT), "electronic ink" display, or the like) or an audio output device (e.g., a speaker, headphones, or the like). In some implementations, at least one such display device and/or audio device is included with output component 89.

The computing device 899 may also include at least one input component 88 for receiving input from user 801. Input component 88 may include, for example, a keyboard, a pointing device, a mouse, a stylus, a touch sensitive panel (e.g., a touch pad or a touch screen), a gyroscope, an accelerometer, a position detector, an audio input device, or the like. A single component, such as a touch screen, may function as both an output device of output component 89 and input component 88. In some implementations, output component 89 and/or input component 88 include an adapter for communicating data and/or instructions between the node and a computer connected thereto.

The computing device 899 may also be connected to a personal GPS-enabled security token 850. Referring to FIG. 8, the security token 850 may include some or all of the same components depicted in computing device 899. For example, the security token 850 may include: an input component, an output component, a processor, one or more memories, transmitters, and receivers (not depicted in FIG. 8). As shown in FIG. 8, the security token 850 may include memory 852. However, as shown and described above, FIG. 3 illustrates that the security token 850 may also include a battery storage, GPS transmitter/receiver, and a security module. The security token's memory 852 may be configured as a Read-Only memory (ROM). The security token's memory 852 may receive or be loaded with binary data from computing device 899 and further store this data in a separate storage device or component.

It will be appreciated that, while various items are illustrated as being stored in memory or on storage while being used, these items or portions of them may be transferred between memory and other storage devices. Alternatively, in other embodiments some or all of the software modules and/or systems may execute in memory on another device and communicate with the illustrated computing systems via inter-computer communication. In some embodiments, some or all of the systems and/or modules may be implemented or provided in other ways, such as at least partially in firmware and/or hardware, including, but not limited to, one or more application-specific integrated circuits (ASICs), standard integrated circuits, controllers (e.g., by executing appropriate instructions, and including microcontrollers and/or embedded controllers), field-programmable gate arrays (FPGAs), complex programmable logic devices (CPLDs), etc. Some or all of the modules, systems and data structures may also be stored (e.g., as software instructions or structured data) on a computer-readable medium, such as a hard disk, a memory, a network or a portable media article to be read by an appropriate drive or via an appropriate connection. The systems, modules and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

In some embodiments, a system memory may be used, which is one embodiment of a computer-readable storage medium, configured to store program instructions and data as described above for Figures 1-8 for implementing embodiments of the corresponding methods and apparatus. However, in other embodiments, program instructions and/or data may be received, sent, or stored upon different types of computer-accessible media. Generally speaking, a computer-readable storage medium may include non-transitory and tangible storage media or memory media such as magnetic or optical media, e.g., disk or DVD/CD coupled to a computer system or gateway device. A computer-readable storage medium may also include any volatile or non-volatile media such as RAM (e.g., SDRAM, DDR SDRAM, RDRAM, SRAM, etc.), ROM, etc., that may be included in some embodiments of the computer systems described above as system memory, gateway device, or another type of memory. Portions or all of the multiple computer systems, such as those illustrated herein, may be used to implement the described functionality in various embodiments; for example, software components running on a variety of different devices and servers may collaborate to provide the functionality.

It will be appreciated that in some embodiments the functionality provided by the routines discussed above may be provided in alternative ways, such as being split among more routines or consolidated into fewer routines. Similarly, in some embodiments, illustrated routines may provide more or less functionality than is described, such as when other illustrated routines instead lack or include such functionality respectively or when the amount of functionality that is provided is altered. In addition, while various operations may be illustrated as being performed in a particular manner (e.g., in serial or in parallel) and/or in a particular order, in other embodiments the operations may be performed in other orders and in other manners. Similarly, the data structures discussed above may be structured in different ways in other embodiments, such as by having a single data structure split into multiple data structures or by having multiple data structures consolidated into a single data structure, and may store more or less information than is described (e.g., when other illustrated data structures instead lack or include such information respectively or when the amount or types of information that is stored is altered).

Conditional language used herein, such as, among others, "can," "could," "might," "may," "e.g.," and the like, unless specifically stated otherwise, or otherwise understood within the context as used, is generally intended to convey that certain examples include, while other examples do not include, certain features, elements, and/or steps. Thus, such conditional language is not generally intended to imply that features, elements and/or steps are in any way required for one or more examples or that one or more examples necessarily include logic for deciding, with or without author input or prompting, whether these features, elements and/or steps are included or are to be performed in any particular example. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. As used in the description of the disclosure and the appended claims, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, and/or components, but do not preclude the presence or addition of one or more other features, integers, steps, operations, elements, components, and/or groups thereof. Furthermore, the terms "assets" and "computing devices," when used in this specification, may be used interchangeably.

The invention is defined by the scope of the appended claims

## Claims

1. A system (200) for managing security for a plurality of assets (205-209), the system comprising:
one or more memories (315) comprising a list of the plurality of assets (601) and a set of rules having approved geographical location information for each of the plurality of assets (602); and
a security token,
wherein the one or more memories are communicatively coupled to a processor (316), the one or more memories comprising computer-readable instructions that, when executed by the processor, cause the system to:
receive, via one of the plurality of assets, a current geographical location for one of the plurality of assets (603);
compare the received current geographical location with the set of rules having approved geographical location information for the one of the plurality ofassets (604);
detect a rule violation (605); and
generate an alert signal (607) in response to the detected rule violation (606),
wherein the security token (275) receives the alert signal,
wherein the security token, in response to receiving the alert signal, is configured to allow a user to determine one of the following actions:
dismiss the rule violation (730);
allow the rule violation (720); and
disable, lock, or wipe clean information contained in the one of the plurality of assets (704),
wherein the security token is configured to update (721) the set of rules in the one or more memories (315), when the rule violation is allowed (720).

2. The system of claim 1, wherein the security token comprises a universal serial bus ,USB, a smart badge, a key fob, an access card, or combinations thereof

3. The system of any of claims 1-2, wherein the security token includes a security module configured to allow access to the information contained in the security token.

4. The system of any of claims 1-3, wherein the set of rules is updated by reconfiguring the set of rules with new location information.

5. A method for managing security for a plurality of global-positioning system, GPS, enabled assets, the method comprising:
storing, by one or more memories, a list of the plurality of GPS-enabled assets and a set of rules having approved geographical location information for each of the plurality of GPS-enabled assets in a storage device;
receiving, by a processor, via one of the plurality of GPS-enabled assets, a current geographical location for one of the plurality of GPS-enabled assets;
comparing, by a processor, the received current geographical location with the set of rules having approved geographical location information for the one of the plurality of GPS-enabled assets;
detecting, by a processor, a rule violation; and
generating, by a processor, an alert signal in response to detecting the rule violation,
wherein a GPS-enabled security token receives the alert signal, the method **characterised in that** the GPS-enabled security token, in response to receiving the alert signal, allows a user to determine one of the following actions:
dismissing the rule violation;
allowing the rule violation; and
disabling, locking, or wiping clean information contained in the one of the plurality of GPS-enabled assets,
wherein the security token updates (721) the set of rules, when the rule violation is allowed (720).

6. The method of claim 5, wherein the GPS-enabled security token comprises a universal serial bus, USB, a smart badge, a key fob, an access card, or combinations thereof.

7. The method of any one of claims 5-6, wherein the GPS-enabled security token includes a security module configured to allow access to the information contained in the GPS-enabled security token.

8. The method of any one of claims 5-7, wherein the set of rules is updated by reconfiguring the set of rules with new location information.

9. A global-positioning system, GPS, enabled security token, the token comprising
one or more memories comprising a list of the plurality of GPS-enabled assets and a set of rules having approved geographical location information for each of the plurality of GPS-enabled assets,
wherein the one or memories are communicatively coupled to a processor, the one
or more memories comprising computer-readable instructions that, when executed by the processor, cause the processor to:
receive, via one of the plurality of GPS-enabled assets a current geographical location for one of the plurality of GPS-enabled assets;
compare the received current geographical location with the set of rules having approved geographical location information for the one of the plurality of GPS-enabled assets;
detect a rule violation; and
perform a predetermined action in response to the detected rule violation,
wherein performing the predetermined action in response to the detected rule violation comprises the security token being configured to allow a user to determine one of the following actions:
dismiss the rule violation;
allow the rule violation; and
disable, lock, or wipe clean information contained in the one of the plurality of GPS-enabled assets,
wherein the security token is configured to update (721) the set of rules in the one or more memories (315), when the rule violation is allowed (720).

10. The token of claim 9, wherein the one or more memories and the processor are configured to be located inside the GPS-enabled security token.

11. The token of claim 9 or 10, wherein the GPS-enabled security token comprises a universal serial bus, USB, a smart badge, a key fob, an access card, or combinations thereof.

12. The token of any one of claims 9-11, wherein the GPS-enabled security token includes a security module configured to allow access to the information contained in the GPS-enabled security token.

13. The token of any one of claims 9-12, wherein the set of rules is updated by reconfiguring the set of rules with new location information.

## Patentansprüche

1. System (200) zum Verwalten der Sicherheit für eine Vielzahl von Vermögenswerten (205-209), wobei das System umfasst:
einen oder mehrere Speicher (315), die eine Liste der Vielzahl von Vermögenswerten (601) und einen Satz von Regeln mit genehmigten geografischen Standortinformationen für jeden der Vielzahl von Vermögenswerten (602) umfassen; und
ein Sicherheits-Token,
wobei der eine oder die mehreren Speicher kommunikativ mit einem Prozessor (316) gekoppelt sind, wobei der eine oder die mehreren Speicher computerlesbare Befehle umfassen, die, wenn sie vom Prozessor ausgeführt werden, das System veranlassen,:
über einen der mehreren Vermögenswerte einen aktuellen geografischen Standort für eine der mehreren Vermögenswerte (603) empfangen;
Vergleichen des empfangenen aktuellen geografischen Standorts mit dem Regelsatz, der genehmigte geografische Standortinformationen für den einen aus der Vielzahl von Vermögenswerten hat (604);
Erkennen einer Regelverletzung (605); und
Erzeugen eines Alarmsignals (607) als Reaktion auf die erkannte Regelverletzung (606),
wobei das Sicherheits-Token (275) das Alarmsignal empfängt,
wobei das Sicherheits-Token als Reaktion auf den Empfang des Alarmsignals so konfiguriert ist, dass es einem Benutzer erlaubt, eine der folgenden Aktionen zu bestimmen:
Abweisen der Regelverletzung (730);
Zulassen der Regelverletzung (720); und
Deaktivieren, Sperren oder Löschen von Informationen, die in dem einen der mehreren Vermögenswerte (704) enthalten sind,
wobei das Sicherheits-Token so konfiguriert ist, dass es den Satz von Regeln in dem einen oder den mehreren Speichern (315) aktualisiert (721), wenn die Regelverletzung zugelassen wird (720).

2. System nach Anspruch 1, wobei das Sicherheits-Token einen Universal Serial Bus, USB, einen Smart Badge, einen Schlüsselanhänger, eine Zugangskarte oder Kombinationen davon umfasst.

3. System nach einem der Ansprüche 1 bis 2, wobei das Sicherheits-Token ein Sicherheitsmodul enthält, das so konfiguriert ist, dass es den Zugriff auf die in dem Sicherheits-Token enthaltenen Informationen ermöglicht.

4. System nach einem der Ansprüche 1 bis 3, wobei der Satz von Regeln durch Rekonfiguration des Satzes von Regeln mit neuen Standortinformationen aktualisiert wird.

5. Verfahren zum Verwalten der Sicherheit für eine Vielzahl von GPS-fähigen Vermögenswerten, wobei das Verfahren umfasst:
Speichern, durch einen oder mehrere Speicher, einer Liste der Vielzahl von GPS-fähigen Vermögenswerten und eines Satzes von Regeln mit genehmigten geografischen Standortinformationen für jeden der Vielzahl von GPS-fähigen Vermögenswerten in einer Speichereinrichtung;
Empfangen eines aktuellen geografischen Standorts für einen der mehreren GPS-fähigen Vermögenswerte durch einen Prozessor;
Vergleichen des empfangenen aktuellen geografischen Standorts durch einen Prozessor mit dem Satz von Regeln, die genehmigte geografische Standortinformationen für den einen der mehreren GPS-fähigen Vermögenswerte haben;
Erkennen einer Regelverletzung durch einen Prozessor; und
Erzeugen eines Alarmsignals durch einen Prozessor als Reaktion auf die Erkennung der Regelverletzung,
wobei ein GPS-fähiges Sicherheits-Token das Alarmsignal empfängt,
wobei das Verfahren **dadurch gekennzeichnet ist, dass**
das GPS-fähige Sicherheits-Token als Reaktion auf den Empfang des Alarmsignals einem Benutzer ermöglicht, eine der folgenden Aktionen zu bestimmen:
Verwerfen der Regelverletzung;
Zulassen der Regelverletzung; und
Deaktivieren, Sperren oder Löschen von Informationen, die in dem einen der mehreren GPS-fähigen Vermögenswerten enthalten sind,
wobei das Sicherheits-Token den Satz von Regeln aktualisiert (721), wenn die Regelverletzung erlaubt ist (720).

6. Verfahren nach Anspruch 5, wobei das GPS-fähige Sicherheits-Token einen Universal Serial Bus, USB, einen Smart Badge, einen Schlüsselanhänger, eine Zugangskarte oder Kombinationen davon umfasst.

7. Verfahren nach einem der Ansprüche 5-6, wobei das GPS-fähige Sicherheits-Token ein Sicherheitsmodul enthält, das so konfiguriert ist, dass es den Zugriff auf die im GPS-fähigen Sicherheits-Token enthaltenen Informationen ermöglicht.

8. Verfahren nach einem der Ansprüche 5-7, wobei der Regelsatz durch Rekonfiguration des Regelsatzes mit neuen Standortinformationen aktualisiert wird.

9. Sicherheits-Token, das ein globales Positionsbestimmungssystem, GPS, aufweist, wobei das Token aufweist:
einen oder mehrere Speicher, die eine Liste der mehreren GPS-fähigen Vermögenswerte und einen Satz von Regeln mit genehmigten geografischen Standortinformationen für jeden der mehreren GPS-fähigen Vermögenswerte enthalten,
wobei der eine oder die mehreren Speicher kommunikativ mit einem Prozessor gekoppelt sind, wobei der eine oder die mehreren Speicher computerlesbare Befehle umfassen, die, wenn sie von dem Prozessor ausgeführt werden, den Prozessor dazu veranlassen:
Empfangen über einen der mehreren GPS-fähigen Vermögenswerte eines aktuellen geografischen Standorts für einen der mehreren GPS-fähigen Vermögenswerte;
Vergleichen des empfangenen aktuellen geografischen Standorts mit dem Regelsatz, der genehmigte geografische Standortinformationen für den einen aus der Vielzahl der GPS-fähigen Vermögenswerte hat;
Erkennen einer Regelverletzung; und
Durchführen einer vorbestimmten Aktion als Reaktion auf die erkannte Regelverletzung,
wobei die Durchführung der vorbestimmten Aktion als Reaktion auf die erkannte Regelverletzung umfasst, dass das Sicherheits-Token so konfiguriert ist, dass es einem Benutzer erlaubt, eine der folgenden Aktionen zu bestimmen:
Abweisen der Regelverletzung;
Zulassen der Regelverletzung; und
Deaktivieren, Sperren oder Löschen von Informationen, die in dem einen der mehreren GPS-fähigen Vermögenswerte enthalten sind,
wobei das Sicherheits-Token so konfiguriert ist, dass es den Satz von Regeln in dem einen oder den mehreren Speichern (315) aktualisiert (721), wenn die Regelverletzung zugelassen wird (720).

10. Token nach Anspruch 9, wobei der eine oder die mehreren Speicher und der Prozessor so konfiguriert sind, dass sie sich im Inneren des GPS-fähigen Sicherheits-Tokens befinden.

11. Token nach Anspruch 9 oder 10, wobei das GPS-fähige Sicherheits-Token einen Universal Serial Bus, USB, einen Smart Badge, einen Schlüsselanhänger, eine Zugangskarte oder Kombinationen davon umfasst.

12. Token nach einem der Ansprüche 9-11, wobei das GPS-fähige Sicherheits-Token ein Sicherheitsmodul enthält, das so konfiguriert ist, dass es den Zugriff auf die in dem GPS-fähigen Sicherheits-Token enthaltenen Informationen ermöglicht.

13. Token nach einem der Ansprüche 9-12, wobei der Regelsatz durch Rekonfiguration des Regelsatzes mit neuen Standortinformationen aktualisiert wird.

## Revendications

1. Système (200) de gestion de la sécurité pour une pluralité de biens (205-209), le système comprenant :
une ou plusieurs mémoires (315) comprenant une liste de la pluralité de biens (601) et un ensemble de règles ayant des informations de localisation géographique approuvées pour chacun de la pluralité de biens (602) ; et
un jeton de sécurité,
la ou les mémoires étant couplées de manière communicative à un processeur (316), la ou les mémoires comprenant des instructions lisibles par ordinateur qui, lorsqu'elles sont exécutées par le processeur, amènent le système à :
recevoir, par l'intermédiaire de l'un de la pluralité de biens, une localisation géographique actuelle pour l'un de la pluralité de biens (603),
comparer la localisation géographique actuelle reçue avec l'ensemble de règles ayant approuvé les informations sur la localisation géographique pour l'un de la pluralité de biens (604),
détecter une violation de règle (605) ; et
générer un signal d'alerte (607) en réponse à la violation de règle détectée (606),
le jeton de sécurité (275) recevant le signal d'alerte,
le jeton de sécurité, en réponse à la réception du signal d'alerte, étant configuré pour autoriser un utilisateur à déterminer l'une des actions suivantes :
rejeter la violation de règle (730) ;
autoriser la violation de règle (720), et
désactiver, verrouiller ou effacer des informations contenues dans l'un de la pluralité de biens (704),
le jeton de sécurité étant configuré pour mettre à jour (721) l'ensemble de règles dans la ou les mémoires (315), lorsque la violation de règle est autorisée (720).

2. Système selon la revendication 1, le jeton de sécurité comprenant un bus série universel, USB, un badge à puce, un porte-clés, une carte d'accès, ou des combinaisons de ceux-ci.

3. Système selon l'une quelconque des revendications 1 et 2, le jeton de sécurité comprenant un module de sécurité configuré pour autoriser l'accès aux informations contenues dans le jeton de sécurité.

4. Système selon l'une quelconque des revendications 1 à 3, l'ensemble de règles étant mis à jour en reconfigurant l'ensemble de règles avec de nouvelles informations de localisation.

5. Procédé de gestion de la sécurité pour une pluralité de biens activés par un système de positionnement global, GPS, le procédé comprenant :
le stockage, par une ou plusieurs mémoires, d'une liste de la pluralité de biens activés par GPS et d'un ensemble de règles ayant des informations de localisation géographique approuvées pour chacun de la pluralité de biens activés par GPS dans un dispositif de stockage ;
la réception, par un processeur, via l'un de la pluralité de biens activés par GPS, d'une localisation géographique actuelle pour l'un de la pluralité de biens activés par GPS ;
la comparaison, par un processeur, de la localisation géographique actuelle reçue avec l'ensemble de règles ayant approuvé les informations de localisation géographique pour l'un de la pluralité de biens activés par GPS ;
la détection, par un processeur, d'une violation de règle ; et
la génération, par un processeur, d'un signal d'alerte en réponse à la détection de la violation de règle,
un jeton de sécurité activé par GPS recevant le signal d'alerte, le procédé étant **caractérisé en ce que** le jeton de sécurité activé par GPS, en réponse à la réception du signal d'alerte, autorise un utilisateur à déterminer l'une des actions suivantes :
le rejet de la violation de règle ;
l'autorisation de la violation de règle, et
la désactivation, le verrouillage ou l'effacement des informations contenues dans l'un de la pluralité de biens activés par GPS,
le jeton de sécurité mettant à jour (721) l'ensemble de règles, lorsque la violation de règle est autorisée (720).

6. Procédé selon la revendication 5, le jeton de sécurité activé par GPS comprenant un bus série universel, USB, un badge à puce, un porte-clés, une carte d'accès, ou des combinaisons de ceux-ci.

7. Procédé selon l'une quelconque des revendications 5 et 6, le jeton de sécurité activé par GPS comprenant un module de sécurité configuré pour autoriser l'accès aux informations contenues dans le jeton de sécurité activé par GPS.

8. Procédé selon l'une quelconque des revendications 5 à 7, l'ensemble de règles étant mis à jour en reconfigurant l'ensemble de règles avec de nouvelles informations de localisation.

9. Jeton de sécurité activé par un système de positionnement global, GPS, le jeton comprenant :
une ou plusieurs mémoires comprenant une liste de la pluralité de biens activés par GPS et un ensemble de règles ayant des informations de localisation géographique approuvées pour chacun de la pluralité de biens activés par GPS,
la ou les mémoires étant couplées de manière communicative à un processeur, la ou les mémoires comprenant des instructions lisibles par ordinateur qui, lorsqu'elles sont exécutées par le processeur, amènent le processeur à :
recevoir, par l'intermédiaire de l'un de la pluralité de biens activés par GPS, une position géographique actuelle pour l'un de la pluralité de biens activés par GPS ;
comparer la position géographique actuelle reçue avec l'ensemble de règles ayant approuvé les informations de position géographique pour l'un de la pluralité de biens activés par GPS ;
détecter une violation de règle ; et
réaliser une action prédéterminée en réponse à la violation de règle détectée, l'exécution de l'action prédéterminée en réponse à la violation de règle détectée comprenant le jeton de sécurité configuré pour autoriser un utilisateur à déterminer l'une des actions suivantes :
rejeter la violation de règle ;
autoriser la violation de règle ; et
désactiver, verrouiller ou effacer des informations contenues dans l'un de la pluralité de biens activés par GPS,
le jeton de sécurité étant configuré pour mettre à jour (721) l'ensemble de règles dans la ou les mémoires (315), lorsque la violation de règle est autorisée (720).

10. Jeton selon la revendication 9, la ou les mémoires et le processeur étant configurés pour être situés à l'intérieur du jeton de sécurité activé par GPS.

11. Jeton selon la revendication 9 ou 10, le jeton de sécurité activé par GPS comprenant un bus série universel, USB, un badge à puce, un porte-clés, une carte d'accès, ou des combinaisons de ceux-ci.

12. Jeton selon l'une quelconque des revendications 9 à 11, le jeton de sécurité activé par GPS comprenant un module de sécurité configuré pour autoriser l'accès aux informations contenues dans le jeton de sécurité activé par GPS.

13. Jeton selon l'une quelconque des revendications 9 à 12, l'ensemble de règles étant mis à jour en reconfigurant l'ensemble de règles avec de nouvelles informations de localisation.
